Europäisches Patentamt

European Patent Office

Office européen des brevets

(19)

(11) Veröffentlichungsnummer: **0 023 285**
**A2**

(12) # EUROPÄISCHE PATENTANMELDUNG

(21) Anmeldenummer: **80103821.7**

(22) Anmeldetag: **04.07.80**

(51) Int. Cl.³: **E 04 H 3/19**
**E 04 H 3/20, F 24 J 3/02**

(30) Priorität: **27.07.79 DE 2930596**

(43) Veröffentlichungstag der Anmeldung:
**04.02.81 Patentblatt 81/5**

(84) Benannte Vertragsstaaten:
**AT CH FR GB LI**

(71) Anmelder: **Vama, Vertrieb von Anlagen und Maschinen**
**GmbH & Co. KG**
**An der Scharlake 39**
**D-3200 Hildesheim(DE)**

(72) Erfinder: **Sachse, Christian**
**Tränkewinkel 14**
**D-3201 Feldbergen in Schellerten(DE)**

(74) Vertreter: **Patentanwälte Manitz, Finsterwald und**
**Grämkow**
**Robert-Koch-Strasse 1**
**D-8000 München 22(DE)**

(54) **Flexible Schwimmbadabdeckung.**

(57) Die Erfindung bezieht sich auf eine flexible Schwimmbadabdeckung, die gleichzeitig ein als Sonnenkollektor wirkendes Kanalsystem aufweist und entlüft- sowie zusammenlegbar ausgebildet ist.

F I G.1

EP 0 023 285 A2

- 1 -

Die Erfindung betrifft eine flexible Schwimmbadabdeckung.

Bei Freibädern, insbesondere bei privaten Freibädern wird
bei Nichtbenutzung des Schwimmbads die Wasseroberfläche
häufig abgedeckt, um eine Verschmutzung des Wassers, z.B.
durch fallendes Laub, zu verhindern, eine Gefahrenquelle
für Kinder zu beseitigen und auch einer unerwünschten
Abkühlung des Beckenwassers, insbesondere während der
Nachtzeiten entgegenzuwirken.

Aufgabe der vorliegenden Erfindung ist es, eine Schwimmbadabdeckung von vergleichsweise einfachem Aufbau zu schaffen,
die es ermöglicht, den energiesparenden Effekt derartiger
Abdeckungen wesentlich zu steigern, und zwar unter Beibehaltung aller sonstigen vorteilhaften Funktionen derartiger
Abdeckungen.

Diese Aufgabe wird gemäß der Erfindung gelöst durch eine
schwimmfähige, wärmedämmend ausgebildete Trägerlage, auf
der ein wenigstens einen Zufluß und einen Abfluß aufweisendes, einen Sonnenkollektor bildendes Kanalsystem angeordnet ist.

Die Ausgestaltung einer Schwimmbadabdeckung in Form eines
schwimmfähigen Sonnenkollektors erbringt bei im Vergleich
zu herkömmlichen Schwimmbadabdeckungen ausgesprochen
geringem Mehraufwand wesentliche Vorteile, da eine optimale
Kollektorfläche zur Verfügung steht, und insbesondere bei
den am weitesten verbreiteten kleineren Becken die Schwimmbadabdeckung auch während der Benutzung des Schwimmbades
als Sonnenkollektor verwendet werden kann, da dieser Sonnenkollektor seine volle Wirksamkeit beibehält, wenn er neben
das Becken oder beispielsweise auf eine Terrasse gelegt
oder in geeigneter Weise aufgehängt wird.

Die Trägerlage kann gemäß einer Ausführungsform aus einer zumindest schwimmflächenseitig geschlossene Poren aufweisenden Schaumstofflage bestehen, die einerseits bezüglich des Schwimmbeckenwassers einen guten Wärmedämmeffekt erbringt und andererseits eine ausreichende Tragekraft für das Kanalsystem gewährleistet.

Gemäß einer bevorzugten Ausführungsform ist die Trägerlage als Flachluftkissen ausgebildet, das zweckmäßigerweise in eine Vielzahl geschlossener bzw. verschließbarer Einzelkammern unterteilt ist.

Auch diese Ausführungsform erbringt den geforderten hohen Wärmedämmeffekt verbunden mit ausreichend hohen Auftriebskräften, und sie weist den ergänzenden Vorteil auf, daß die gesamte Abdeckung nach erfolgter Entlüftung raumsparend zusammengelegt und aufbewahrt werden kann.

Die Kanäle des mäander- oder kammförmig ausgebildeten Kanalsystems bestehen bevorzugt aus Folienmaterial, wobei wiederum nach einer speziellen Ausgestaltung der Erfindung die Kanäle des Kanalsystems durch die Deckfläche der Trägerlage und eine mit dieser Trägerlage unter Ausbildung der Kanäle verbundene Deckfolie begrenzt sein können. Bei einer weiteren Ausführungsform sind durch diese Kanäle Schläuche gezogen, die das durch den Kollektor strömende Wasser führen. Diese Schläuche, die durch das Kanalsystem in ihrer jeweiligen Lage fixiert werden, erbringen eine Verstärkung des Kanalsystems und machen die gesamte Schwimmbadabdeckung gegenüber evtl. mechanischen Beschädigungen hinsichtlich der Funktion als Solarkollektor weitestgehend unempfindlich.

Als Folienmaterial wird bevorzugt eine schwarze Kunststofffolie verwendet, die eine hohe Absorptionsfähigkeit für Wärmestrahlung aufweist.

Eine weitere Besonderheit der Erfindung besteht darin, daß das Kanalsystem durch eine aufblasbare, eine Luftkammer bildende Klarsichthaube überspannt ist. Diese kuppelförmige Klarsichthaube leitet Regenwasser und ggf. Spritzwasser von der Kollektoroberfläche seitlich ab und verhindert unerwünschte Verdunstungsverluste. Außerdem trägt sie aufgrund eines sich einstellenden Treibhauseffekts und eines Luftpolsters, das Konvektionsverluste verhindert, zu einer zusätzlichen Erwärmung des Kanalsystems bei.

Nach einer weiteren zweckmäßigen Ausgestaltung der Erfindung ist mit dem Rand der Trägerlage ein vorzugsweise aufblasbarer Luftschlauch verbunden, der die Kollektorfläche umgibt und verhindert, daß Schwimmbadwasser auf die Kollektoroberfläche schwappt und dessen Wirksamkeit beeinträchtigt.

Der die Trägerlage umgebende Luftschlauch ist zweckmäßigerweise mit dem unteren Rand der Klarsichthaube verbunden, wobei die Verbindungsstelle so hoch gewählt ist, daß sich auf der Schwimmbadabdeckung praktisch keine nennenswerte Wassermenge sammeln kann, wodurch auch während einer Regenperiode keine störenden Belastungen der Schwimmbadabdeckung auftreten können. Zur zusätzlichen Vermeidung von Verdunstungsverlusten und zur Reinhaltung des Schwimmbadwassers kann der aufblasbare Umfangs-Luftschlauch ringsum mit einem Folienrand versehen werden, der die restliche Wasseroberfläche bis über den Beckenrand hinaus abdeckt.

Der Zufluß des Kanalsystems der Schwimmbadabdeckung ist im praktischen Einsatz über eine Leitung mit dem unteren Schwimmbeckenbereich und der Abflußanschluß mit einer im Beckenbereich mündenden Verteileinrichtung für erwärmtes Wasser verbunden. In das wasserführende System ist eine Umwälupumpe eingeschaltet, die vorzugsweise in Abhängigkeit von der Temperaturdifferenz des Wassers im Schwimmbad und des Wassers im Kanalsystem des Sonnenkollektors gesteuert ist und damit nur bei positiver Temperaturdifferenz in Betrieb gesetzt wird.

Um eine möglichst gleichmäßige und auch relativ schnelle Erwärmung des Schwimmbeckenwassers zu gewährleisten, wird das durch den Sonnenkollektor erwärmte Wasser vorzugsweise durch eine fächerförmig angeordnete Verteilerdüse in den insbesondere unteren Bereich des Schwimmbeckens zurückgeleitet.

Wird die Schwimmbadabdeckung während der Benutzung des Schwimmbeckens neben dem Schwimmbecken abgelegt und dabei noch als Aufheizeinrichtung für das Schwimmbeckenwasser verwendet, so kann das durch den Sonnenkollektor erwärmte Wasser unmittelbar über einen Schlauch in das Becken zurückgeleitet werden.

Ausführungsbeispiele der Erfindung werden nachfolgend unter Bezugnahme auf die Zeichnung erläutert; in der Zeichnung zeigt:

Fig. 1          eine schematische Draufsicht einer erfindungsgemäßen Schwimmbadabdeckung für ein rundes Schwimmbecken,

Fig. 2          eine schematische Schnittansicht entsprechend der Linie I-I in Fig. 1, und

Fig. 3          eine schematische Schnittansicht einer weiteren Ausführungsform der Erfindung.

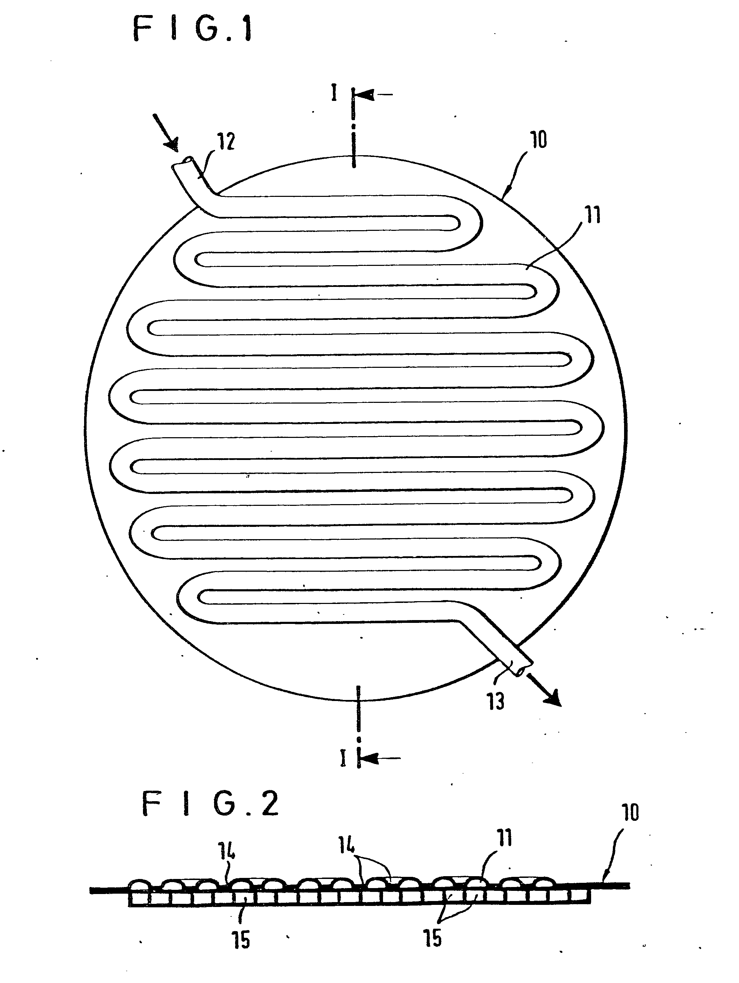

Die flexibel ausgebildete Schwimmbadabdeckung nach Fig. 1 besteht aus einer schwimmfähigen, wärmedämmend ausgebildeten Trägerlage 10, auf der ein wenigstens einen Zufluß 12 und einen Abfluß 13 aufweisendes, einen Sonnenkollektor bildendes Kanalsystem 11 angeordnet ist. Dieses Kanalsystem ist mit der Trägerlage 10 fest verbunden und vorzugsweise integral mit dieser Trägerlage ausgebildet.

Der Verlauf der wasserführenden Kanäle kann prinzipiell beliebig gewählt werden, aber in vielen Fällen bietet es sich an, die Kanäle mäanderförmig zu führen.

Die Schnittansicht nach Fig. 2 zeigt ein Beispiel einer Ausbildung der schwimmfähigen Trägerlage 10, welche die Form eines in eine Vielzahl von Einzelkammern 15 unterteilten Flachluftkissens besitzt.

Das Kanalsystem 11 ist bei dieser Ausführungsvariante durch eine vorzugsweise schwarze Kunststoffolie realisiert, die unter Ausbildung der Kanäle 11 mit der Oberfläche der Trägerlage 10 in Bereichen 14 verbunden ist. Diese Verbindung erfolgt vorzugsweise durch linienförmiges Verschweißen, so daß sich ein dicht aneinanderliegendes und damit besonders wirksames Kollektorsystem ergibt.

Ein wesentlicher Vorteil dieser in der Herstellung besonders günstigen Ausführungsform besteht darin, daß nach Entlüftung des Flachluftkissens und nach Entleerung des Kanalsystems ein besonders raumsparendes Zusammenlegen der gesamten Schwimmbadabdeckung, bzw. ein einfaches Aufwickeln ermöglicht wird, wobei während des Aufwickelvorgangs, insbesondere im Falle von relativ großflächigen, rechteckigen Abdeckungen, durch die Wickelkräfte Luft und Wasser zwangsläufig aus dem Flachluftkissen gedrückt wird.

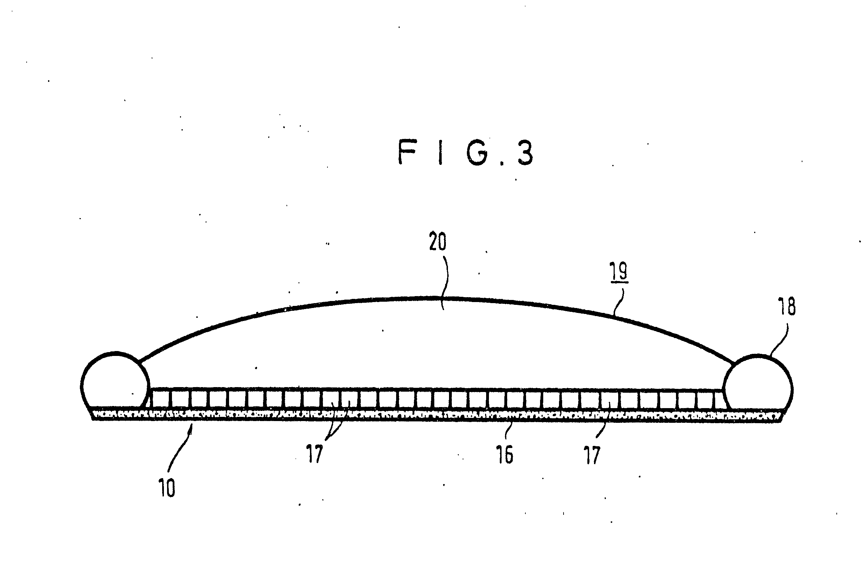

Besonders günstig ist die Ausführungsform der Erfindung nach Fig. 3., bei der die gesamte Kollektorfläche von einer aufblasbaren Klarsichthaube 19 überspannt ist, die einerseits Regen und Spritzwasser von der Kollektorfläche fern hält und andererseits aufgrund des sich einstellenden Treibhauseffekts eine zusätzliche Erwärmung der Kollektorschicht erbringt, da durch das Vorhandensein einer Luftkammer über der Kollektorfläche eine ggf. durch Konvektion erfolgende störende Abkühlung verhindert wird.

Ein mit dem Rand der Trägerlage 10 verbundener aufblasbarer Luftschlauch 18 umgibt die Schwimmbadabdeckung und erbringt neben einem mechanischen Schutz auch den Effekt des Abhaltens von Spritz- oder Schwappwasser, das Verdunstungsverluste verursachen und damit die Wirksamkeit des Sonnenkollektors beeinträchtigen könnte.

Der Luftschlauch 18 und die Klarsichthaube 19 sind vorzugsweise unmittelbar miteinander verbunden, und zwar zweckmäßigerweise so, daß sich auf der Gesamtanordnung - bedingt durch ein stetiges Gefälle - keine Wasseransammlungen bilden können und ein sofortiges Ablaufen von Regenwasser oder in sonstiger Weise auf die Anordnung gelangendem Wasser sichergestellt ist.

Der Luftschlauch 18 kann zusätzlich von einem ringförmigen, flachliegenden Folienkranz umgeben sein, der die verbleibende Wasseroberfläche zwischen Abdeckung und Beckenrand verschließt und damit Verdunstung und Verschmutzung verhindert.

Bei der Ausführungsform nach Fig. 3 ist als Trägerlage 10 die Verwendung einer Schaumstoffschicht 16 angedeutet, wobei diese Schaumstoffschicht aus geschlossenzelligem Schaumstoff bestehen kann oder ein üblicher offenzelliger Schaumstoff mit einer Außenschicht verwendet wird, die ein Eindringen von Wasser in die Schaumstoffschicht verhindert. Die einzelnen Kanäle 17 des Kollektorsystems sind in diesem Falle unmittelbar aneinandergrenzend dargestellt, aber dies stellt nur eine mögliche Ausführungsform ohne einschränkenden Charakter dar.

Im praktischen Betrieb wird der Zufluß 12 des Kanalsystems 11 über eine Leitung mit dem unteren Schwimmbeckenbereich und der Abfluß 13 mit einer im Beckenbereich mündenden Verteilereinrichtung für erwärmtes Wasser verbunden, wobei

BAD ORIGINAL

in das wasserführende System eine Umwälzpumpe eingeschaltet ist. Die Pumpe wird elektronisch gesteuert in Abhängigkeit von der Differenz zwischen Wassertemperatur und Kollektortemperatur. Die Kollektortemperatur kann ersatzweise auch unter einer Klarsichtkuppel am Pumpengehäuse gefühlt werden.

Gemäß einer weiteren Ausgestaltung der Erfindung kann die Motorwelle der Wasserpumpe mit einer Luftpumpe mit fest eingestelltem Druck verbunden werden, so daß diese Luftpumpe ständig mitläuft und gewährleistet, daß die Klarsichtkuppel und der ringförmige Luftschlauch stets unter einem konstanten Druck stehen. Das ständige Mitlaufen der Luftpumpe erbringt dabei den Vorteil, daß auch bei evtl. kleineren Undichtigkeiten und Verletzungen der Folie der Klarsichtkuppel oder des Luftschlauchs stets ein formerhaltender Druck in diesen beiden Gebilden gewährleistet ist.

- 1 -

1. Flexible Schwimmbadabdeckung, g e k e n n z e i c h -
   n e t durch eine schwimmfähige, wärmedämmend ausgebildete
   Trägerlage (10), auf der ein wenigstens einen Zufluß
   (12) und einen Abfluß (13) aufweisendes, einen Sonnenkollektor bildendes Kanalsystem (11; 17) angeordnet ist.

2. Schwimmbadabdeckung nach Anspruch 1, dadurch g e k e n n -
   z e i c h n e t , daß die Trägerlage (10) aus einer zumindest schwimmflächenseitig geschlossene Poren aufweisenden Schaumstofflage (16) besteht.

3. Schwimmbadabdeckung nach Anspruch 1, dadurch g e k e n n -
   z e i c h n e t , daß die Trägerlage (10) als Flachluftkissen mit wenigstens zwei entlüftbaren Einzelkammern (15)
   ausgebildet ist.

4. Schwimmbadabdeckung nach Anspruch 1, dadurch g e k e n n -
   z e i c h n e t , daß die Kanäle des Kanalsystems (11; 17)
   aus Folienmaterial bestehen.

5. Schwimmbadabdeckung nach Anspruch 4, dadurch g e k e n n -
   z e i c h n e t , daß jeweils ein Teilbereich der Kanalwandungen von der Deckfläche der Trägerlage (10) gebildet ist.

6. Schwimmbadabdeckung nach einem oder mehreren der vorhergehenden Ansprüche, dadurch g e k e n n z e i c h n e t ,
   daß zumindest die von der Schwimmseite abgewandten Wandungen des Kanalsystems (11; 17) aus einem Wärmestrahlen
   absorbierenden Material bestehen.

7. Schwimmbadabdeckung nach einem der vorhergehenden Ansprüche,
   dadurch g e k e n n z e i c h n e t , daß das Kanalsystem
   von wenigstens einem das zu erwärmende Wasser führenden
   Schlauch durchzogen ist.

BAD ORIGINAL

8. Schwimmbadabdeckung nach einem oder mehreren der vorhergehenden Ansprüche, dadurch g e k e n n z e i c h n e t , daß das Kanalsystem (11; 17) durch eine aufblasbare, wenigstens eine Luftkammer (20) bildende Klarsichthaube (19) überspannt ist.

9. Schwimmbadabdeckung nach einem oder mehreren der vorhergehenden Ansprüche, dadurch g e k e n n z e i c h n e t , daß mit dem Rand der Trägerlage (10) ein aufblasbarer Luftschlauch (18) verbunden ist, dessen Höhe im aufgeblasenen Zustand größer ist als die Höhe von Trägerlage (10) und Kanalsystem (11; 17).

10. Schwimmbadabdeckung nach Anspruch 9, dadurch g e k e n n z e i c h n e t , daß der Luftschlauch (18) und der Rand der Klarsichthaube (19) miteinander verbunden sind.

11. Schwimmbadabdeckung nach einem der Ansprüche 8 bis 10, dadurch g e k e n n z e i c h n e t , daß von der Mitte der Klarsichthaube (19) über den aufblasbaren Luftschlauch (18) bis zum Rand der gesamten Abdeckung ein stetiges Gefälle besteht.

12. Schwimmbadabdeckung nach einem oder mehreren der vorhergehenden Ansprüche, dadurch g e k e n n z e i c h n e t , daß der Zufluß (12) des Kanalsystems (11) über eine Leitung mit dem unteren Schwimmbeckenbereich und der Abfluß (13) mit einer ebenfalls im Beckenbereich mündenden Verteileinrichtung für erwärmtes Wasser verbunden ist, und daß in das wasserführende System eine Umwälzpumpe eingeschaltet, die in Abhängigkeit von der Temperaturdifferenz des Wassers im Schwimmbad und des Wassers im Kanalsystem des Sonnenkollektors gesteuert ist.

13. Schwimmbadabdeckung nach Anspruch 12, dadurch g e k e n n -
z e i c h n e t , daß die Temperatur des Wassers im Schwimmbad am Ansaugstutzen der Umwälzpumpe und die Temperatur
des Wassers im Solarsystem ersatzweise unter einer lichtdurchlässigen Kuppel im oder am Pumpengehäuse gefühlt
wird.

F I G.1

F I G.2

FIG.3